# EUROPÄISCHE PATENTSCHRIFT

(11) **EP 2 835 889 B1**
(45) Veröffentlichungstag und Bekanntmachung des Hinweises auf die Patenterteilung: **14.02.2018**
(21) Anmeldenummer: 14173423.6
(22) Anmeldetag: 23.06.2014
(51) Int. Cl.: H02K 1/32, H02K 1/26

(54) **BLECHPAKETANORDNUNG EINES ROTORS**
LAMINATED SHEET PACKAGE OR A ROTOR
AGENCEMENT DE PAQUET DE TÔLES D'UN ROTOR

(30) Priorität: 09.07.2013 DE 102013213406
(43) Veröffentlichungstag der Anmeldung: 11.02.2015
(73) Patentinhaber: Siemens Aktiengesellschaft, 80333 München (DE)
(72) Erfinder: Brenner, Robin, 94036 Passau (DE); Lindmeier, Andreas, 94099 Ruhstorf (DE); Ratzisberger, Dominik, 94149 Kößlarn (DE); Schönbauer, Norbert, 94072 Bad Füssing (DE); Straßinger, Tobias, 94136 Thyrnau (DE); Teringl, Claus, 94060 Pocking (DE)

(56) Entgegenhaltungen:
- DE-A1-102008 016 758
- DE-U1-202011 107 009
- US-A- 4 362 960
- US-A1- 2003 071 525

## Beschreibung

Die Erfindung betrifft einen Rotor nach dem Oberbegriff des Anspruchs 1. Ein solcher Rotor weist eine Blechpaketanordnung für eine elektromagnetische Vorrichtung, und zwar den Rotor, auf. Die Blechpaketanordnung umfasst mindestens zwei ring- oder ringsegmentförmige Blechpakete und mindestens einen Steg, dessen Breitenrichtung überwiegend parallel zur gemeinsamen Symmetrieachse verläuft und dessen Dickenrichtung bezogen auf die gemeinsame Symmetrieachse überwiegend in Tangentialrichtung verläuft. Die Blechpakete sind auf einer gemeinsamen Symmetrieachse nebeneinander flächenparallel aufgereiht angeordnet. Mindestens zwei der Blechpakete sind benachbart und zueinander beabstandet angeordnet. Die Blechpakete weisen jeweils mindestens eine erste und eine zweite Aussparung auf, die jeweils zur Aufnahme mindestens eines elektrischen Leiters vorgesehen sind. Typischerweise ist der elektrische Leiter mit seiner Längsachse überwiegend parallel zur gemeinsamen Symmetrieachse angeordnet, wenn er in die Aussparungen aufgenommen ist.

Es gibt elektrische Maschinen die axiale und radiale Kühlspalte zur Zuführung eines Kühlmittels aufweisen. Das Kühlmittel kann beispielsweise ein Kühlgas, eine Kühlflüssigkeit und/oder ein (anderes) Fluid zum Kühlen sein. Das Kühlmittel (beispielsweise Luft) wird mittels eines Lüfters oder einer Pumpe in die axialen Kühlspalte gedrückt, von wo aus es in die radialen Kühlspalte gepresst wird. In den radialen Kühlspalten sind blättchenförmige Stege angeordnet, um benachbarte Blechpakete auf Abstand zu halten und/oder um den Kühlmittelstrom in der Kühlspalte zu führen. Die Stege werden mittels einer Klebeverbindung, mittels einer Schweißverbindung oder mittels eines Formschlusses an mindestens einem der beiden Blechpakete befestigt.

Weiterhin offenbart die DE 20 2011 107 009 U1 einen Abstandshalter für ein Blechpaket einer elektrischen Maschine. Ferner offenbart die US 2003/00771525 A1 Wärmeübertragungsverbesserung an einem Generatorstatorkern mittels Abstandsblöcken. Die US 4 362 960 offenbart eine Abstandsanordnung für eine Statorbelüftungsleitung einer elektrischen Leistungsmaschine. Schließlich offenbart die DE 10 2008 016 758 A1 einen Stator für eine elektrische Maschine sowie eine elektrische Maschine mit einem solchen Stator.

Der Erfindung liegt die Aufgabe zugrunde, einen Wirkungsgrad des Kühlsystems zu verbessern. Die Verbesserung des Wirkungsgrads kann beispielsweise in einer Verbesserung einer Kühlleistung und/oder in einer Verringerung eines Leistungsbedarfs und/oder einer Verringerung einer Leistungsanforderung an einen Kühlmittellüfter oder an eine Kühlmittelpumpe bestehen. Darüber hinaus ist es eine Aufgabe der Erfindung, ein entsprechendes Verfahren mit diesem Vorteil bereitzustellen.

Erfindungsgemäß wird die Aufgabe durch einen Rotor nach Anspruch 1. Insbesondere umfasst der Rotor mindestens zwei ring- oder ringsegmentförmige Blechpakete und mindestens einen Steg, dessen Breitenrichtung überwiegend parallel zu einer gemeinsamen Symmetrieachse verläuft und dessen Dickenrichtung bezogen auf die gemeinsame Symmetrieachse überwiegend in Tangentialrichtung verläuft. Die ring- oder ringsegmentförmigen Blechpakete sind auf der gemeinsamen Symmetrieachse nebeneinander flächenparallel aufgereiht angeordnet. Mindestens zwei der Blechpakete sind benachbart und zueinander beabstandet angeordnet. Die Blechpakete weisen jeweils mindestens eine erste und eine zweite Aussparung auf. Die Aussparungen sind jeweils zur Aufnahme mindestens eines elektrischen Leiters vorgesehen. Der Steg ist bezogen auf die Tangentialrichtung zwischen zwei benachbarten Aussparungen unsymmetrisch angeordnet.

Ein Konzept der vorliegenden Erfindung kann darin gesehen werden, dass die Stege für eine bevorzugte Anströmrichtung und/oder Drehrichtung der elektromagnetischen Vorrichtung strömungsoptimiert angeordnet werden, um unerwünschte Strömungswiderstände zu verringern, einen Durchsatz des Kühlmittels durch die elektromagnetische Vorrichtung zu erhöhen und/oder eine Kühlmittelzufuhr für zu kühlende Teile der elektromagnetischen Vorrichtung zu verbessern.

Bevorzugt ist, wenn ein erster Abstand des Stegs zu der ersten Aussparung kleiner ist als ein zweiter Abstand des Stegs zu der zweiten Aussparung. Hierdurch wird in einer Drehrichtung des Rotors ein Durchsatz des Kühlmittels durch radiale Kühlspalte zwischen benachbarten Blechpaketen erhöht und somit eine Kühlleistung verbessert.

Eine Weiterbildung sieht vor, dass eine Längsachse des Stegs die gemeinsame Symmetrieachse schneidet. Hierdurch wird vermieden, dass sich durch die unsymmetrische Anordnung des Stegs zwischen den benachbarten Aussparungen eine Länge des Stegs erhöht. Somit wird für die Stege nur ein Minimum an Material benötigt, um einen Radiusbereich mittels Distanzstegen zu versteifen. Hierdurch wird erreicht, dass sich durch die unsymmetrische Anordnung des Stegs ein Trägheitsmoment der elektromagnetischen Vorrichtung nicht erhöht.

Eine alternative Weiterbildung sieht vor, dass eine Längsachse des Stegs die gemeinsame Symmetrieachse nicht schneidet. Dies ist eine weitere Maßnahme, um in einer Drehrichtung des Rotors einen Durchsatz des Kühlmittels durch die scheibenförmigen Zwischenräume zwischen benachbarten Blechpaketen zu erhöhen und somit eine Kühlleistung verbessern.

Es ist auch zweckmäßig, wenn eine Projektion oder ein Schnitt des Stegs auf eine Transversalebene der gemeinsamen Symmetrieachse einen gekrümmten Verlauf aufweist. Hierdurch kann die Kühlmittelströmung strömungstechnisch optimiert werden, um das Kühlmittel mit möglichst geringem Strömungswiderstand (somit mit möglichst geringen mechanischen Energieverlusten) zu Orten zu befördern, die vorrangig zu kühlen sind.

Es kann auch von Vorteil sein, wenn der Steg an einer Mantelfläche des Blechpakets bezogen auf die gemeinsame Symmetrieachse in Radialrichtung endet. Hierdurch können auf das Kühlmittel wirkende Fliehkräfte bestmöglich genutzt werden, um das Kühlmittel mit möglichst hoher Geschwindigkeit aus dem Rotor in Richtung Ständer zu befördern.

Auch ist es möglich, dass der Steg an einer Mantelfläche des Blechpakets in einer Endrichtung endet, die bezogen auf die gemeinsame Symmetrieachse eine Tangentialkomponente aufweist. Hierdurch können auf das Kühlmittel wirkende Fliehkräfte bestmöglich genutzt werden, um das Kühlmittel mit möglichst hoher Geschwindigkeit aus dem Rotor in Richtung eines Spalts zu befördern, der sich zwischen Ständer und Läufer befindet.

Eine weitere Möglichkeit besteht darin, dass der Steg als Schaufel ausgebildet ist, die bezogen auf die gemeinsame Symmetrieachse im Verlauf über eine Radialrichtung und/oder im Verlauf über eine Richtung parallel zur gemeinsamen Symmetrieachse in der Tangentialrichtung gekrümmt ist. Durch eine schaufelförmige oder konkave Ausbildung des Steges kann ein Strömungsprofil des Kühlmittelflusses über die Tangentialrichtung und/oder über eine Richtung parallel zur gemeinsamen Symmetrieachse optimiert werden. Die Richtung, welche parallel zur gemeinsamen Symmetrieachse verläuft, kann auch als Axialrichtung bezeichnet werden.

Die elektromagnetische Vorrichtung kann beispielsweise ein Rotor und/oder ein Stator einer elektrischen Maschine sein. Alternativ kann sie beispielsweise ein Transformator oder ein Elektromagnet sein. Hierdurch ist es möglich, die Erfindung für eine Verbesserung einer Vielzahl von unterschiedlichen elektromagnetischen Vorrichtungen zu nutzen.

Die Erfindung ist anhand der beigefügten Zeichnungen näher erläutert, in denen zeigen:
- FIG 1: schematisch einen Rotor (eines Käfigläufers ohne elektrische Leiter) einer elektrischen Maschine in einer perspektivischen Ansicht;
- FIG 2: schematisch einen Schnitt entlang einer Transversalebene des Rotors der FIG 1;
- FIG 3: schematisch eine perspektivische Teilansicht des Rotors der FIG 1 (mit elektrischen Leitern) mit einem abgewinkelten Schnittverlauf (Stand der Technik);
- FIG 4: schematisch eine perspektivische Detailansicht der FIG 3;
- FIG 5: schematisch eine Detailansicht der Ansicht der FIG 2 für eine erste Ausführungsform des Rotors der vorliegenden Erfindung mit elektrischen Leitern;
- FIG 6: schematisch eine Detailansicht der Ansicht der FIG 2 für eine zweite Ausführungsform des Rotors der vorliegenden Erfindung mit elektrischen Leitern;
- FIG 7: schematisch eine Detailansicht der Ansicht der FIG 2 für eine dritte Ausführungsform des Rotors der vorliegenden Erfindung mit elektrischen Leitern;
- FIG 8: schematisch eine Detailansicht der Ansicht der FIG 2 für eine vierte Ausführungsform des Rotors der vorliegenden Erfindung mit elektrischen Leitern.

Die nachfolgend näher geschilderten Ausführungsbeispiele stellen bevorzugte Ausführungsformen der vorliegenden Erfindung dar.

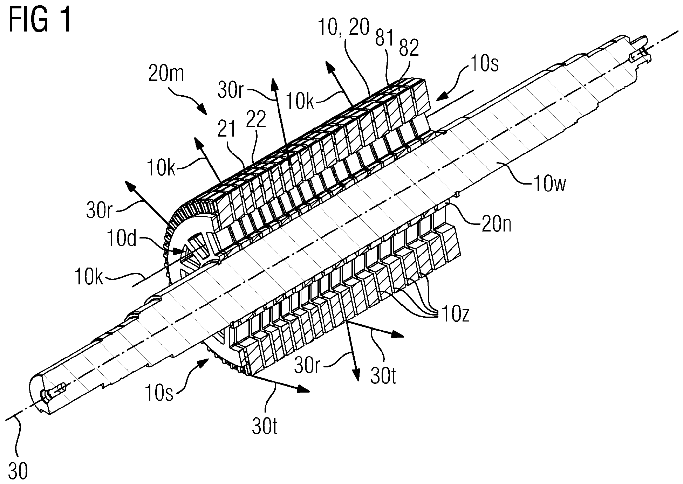

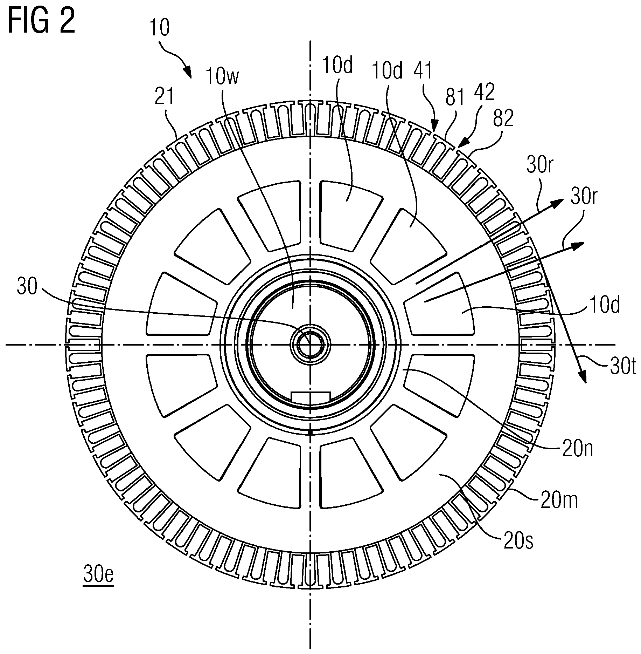

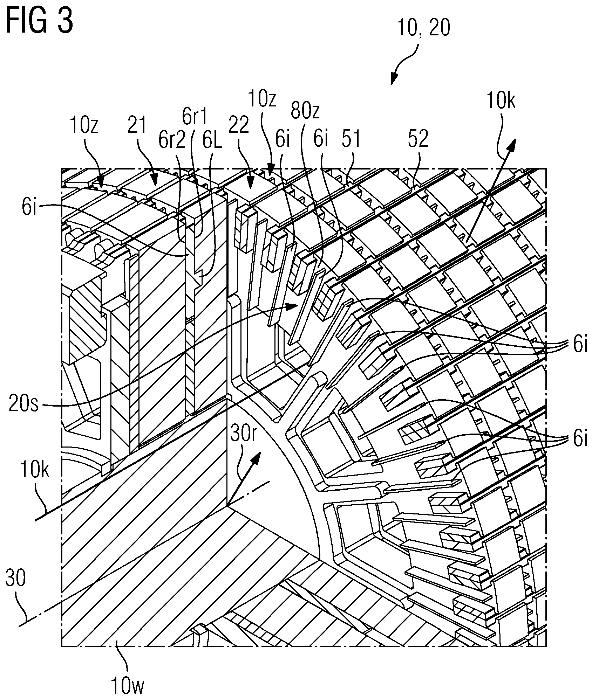

Der in FIG 1 gezeigte Rotor 10 (Läufer) einer elektrischen Maschine umfasst mehrere Blechpakete 21, 22, die auf einer gemeinsamen Symmetrieachse 30 aufgereiht sind. Die gemeinsame Symmetrieachse 30 stimmt mit der Rotationsachse 30 des Rotors 10 überein. Jedes Blechpaket 21, 22 weist an seiner Mantelfläche 20m (seinem Außenumfang) eine Vielzahl von Zähnen 81, 82 auf. Die Aussparungen 41, 42 (Zwischenräume) zwischen den Zähnen 81, 82 sind dafür vorgesehen, dort elektrische Leiter 51, 52 (die beispielsweise aus Kupfer bestehen) einzulegen oder einzuschieben (siehe FIG 3 bis 6). Die Leiter 51, 52 sind in den FIG 1 und 2 nicht dargestellt. Jedes Blechpaket 21, 22 ist mittels einer Nabe 20n auf einer Welle 10w des Rotors 10 befestigt. Zumindest ein Teil der Blechpakete 21, 22 weist zwischen der Nabe 20n eines jeden Blechpakets 21, 22 und seinen Zähnen 81, 82 Durchbrüche 10d zur Führung eines Kühlmittels 10k auf. Benachbarte Blechpakete 21, 22 sind auf der gemeinsamen Symmetrieachse 30 zueinander beabstandet angeordnet. Das Kühlmittel 10k, das an einer oder beiden Stirnseiten 10s des Rotors 10 über die Durchbrüche 10d von Blechpaket 21 zu Blechpaket 22 weitergereicht wird, kann sich in scheibenförmigen Zwischenräumen 10z (die eingangs als 'radiale Kühlspalte' bezeichnet wurden) zwischen jeweils benachbarten Blechpaketen 21, 22 verteilen. Durch Fliehkräfte unterstützt wird das Kühlmittel 10k innerhalb der scheibenförmigen Zwischenräume 10z zwischen benachbarten Blechpaketen 21, 22 in Radialrichtung 30r befördert. Das Kühlmittel 10k kann dann über einen (in den Figuren nicht dargestellten) Kühlmittelabfluss im nicht dargestellten Ständer der elektrischen Maschine in einen Kühlmittelkreislauf zurückgeführt werden. Bei einem offenen System erfolgt dies über ein Entlassen des Kühlmittels in die Umgebung (beispielsweise, wenn als Kühlmittel Umgebungsluft verwendet wird).

Die FIG 2 zeigt einen Schnitt entlang einer Transversalebene 10e des Rotors 10 der FIG 1.

Die FIG 3 zeigt eine Teilansicht eines Rotors 10 mit elektrischen Leitern 51, 52, entsprechend FIG 1 nach dem Stand der Technik. Auf mindestens einer Stirnseite 20s mindestens eines der Blechpakete 21, 22 ist mittig zur Seitenfläche 80z eines jeden Zahns 81, 82 des Blechpakets 21, 22 ein Steg 6i befestigt. Der Steg 6i kann an dem Blechpaket 21, 22 beispielsweise angeschweißt, angelötet oder in das Blechpaket 21, 22 eingesteckt sein. Das Bezugszeichen 6L bezeichnet eine Lasche eines Stegs 6i, die in ein Blechpaket 21 eingesteckt ist, um den Steg 6i darin formschlüssig zu lagern.

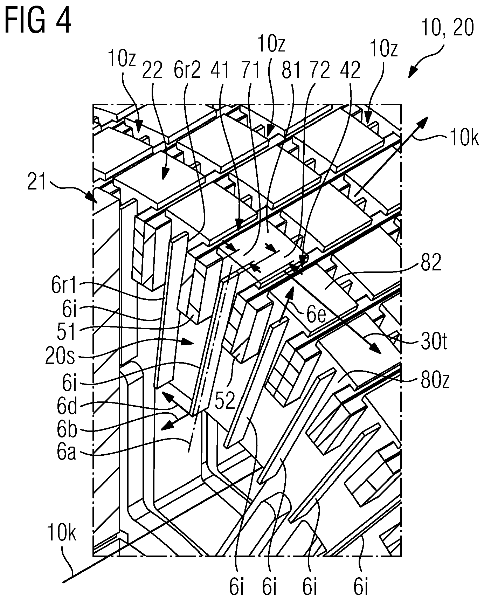

Die FIG 4 zeigt eine Detailansicht der FIG 3. Jeder Steg 6i hat eine Längsachse 6a, eine Breitenrichtung 6b, eine Dickenrichtung 6d und eine Endrichtung 6e. Typischerweise ist eine Ausdehnung des Stegs 6i in Richtung der Längsachse 6a größer als in Breitenrichtung 6b und eine Ausdehnung des Stegs 6i in Breitenrichtung 6b größer als in Dickenrichtung 6d. Bei herkömmlichen elektrischen Maschinen ist ein erster Abstand 71 zwischen dem Steg 6i und einer ersten Aussparung 41 für einen ersten elektrischen Leiter 51 gleich groß wie ein zweiter Abstand 72 zwischen dem Steg 6i und einer zweiten Aussparung 42 für einen zweiten elektrischen Leiter 52, die zu der ersten Aussparung 41 benachbart ist.

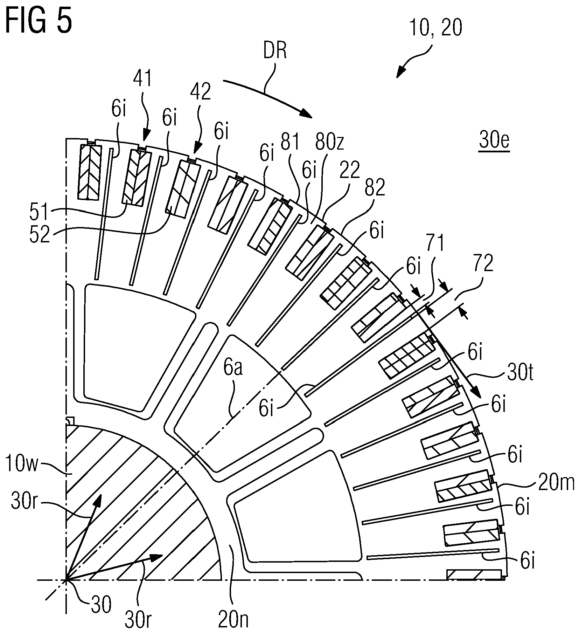

Die FIG 5 zeigt eine Detailansicht der Ansicht der FIG 2 für eine erste Ausführungsform des Rotors 10 mit elektrischen Leitern 51, 52. Hierbei ist ein erster Abstand 71 zwischen dem Steg 6i und einer ersten Aussparung 41 für einen ersten elektrischen Leiter 51 kleiner als ein zweiter Abstand 72 zwischen dem Steg 6i und einer zweiten Aussparung 42 für einen zweiten elektrischen Leiter 52, die zu der ersten Aussparung 41 benachbart ist. In dem Ausführungsbeispiel der FIG 5 verläuft die Längsachse 6a eines jeden Stegs 6i radial zur gemeinsamen Symmetrieachse 30.

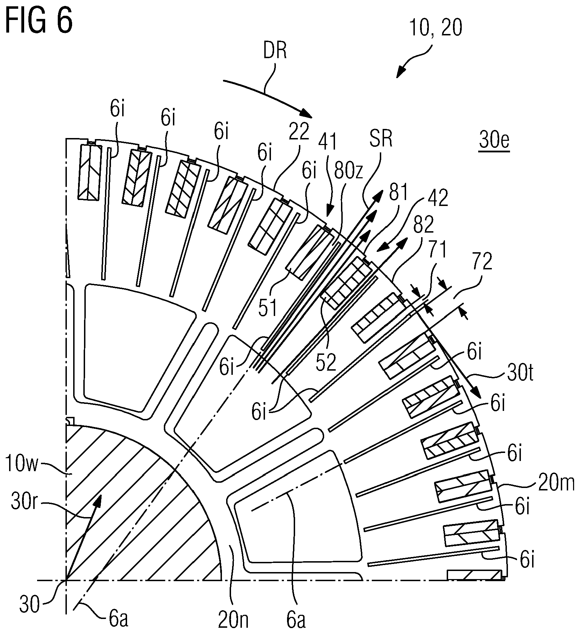

Die FIG 6 zeigt eine Detailansicht der Ansicht der FIG 2 für eine zweite Ausführungsform des Rotors 10 mit elektrischen Leitern 51, 52. Auch hier ist ein erster Abstand 71 zwischen dem Steg 6i und einer ersten Aussparung 41 für einen ersten elektrischen Leiter 51 kleiner als ein zweiter Abstand 72 zwischen dem Steg 6i und einer zweiten Aussparung 42 für einen zweiten elektrischen Leiter 52, die zu der ersten Aussparung 41 benachbart ist. In dem Ausführungsbeispiel der FIG 6 verläuft die Längsachse 6a eines jeden Stegs 6i nicht radial zu der gemeinsamen Symmetrieachse 30, so dass die Längsachse 6a keinen Schnittpunkt mit der gemeinsamen Symmetrieachse 30 hat.

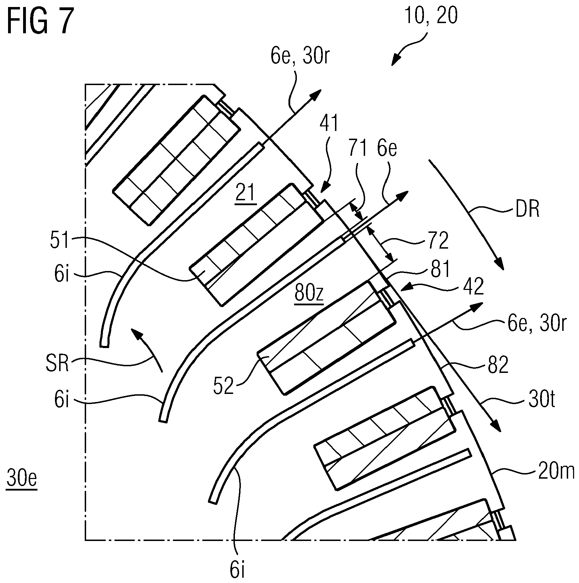

Die FIG 7 zeigt eine Detailansicht der Ansicht der FIG 2 für eine dritte Ausführungsform des Rotors 10 mit elektrischen Leitern 51, 52. In dem Ausführungsbeispiel der FIG 7 sind die Stege 6i schaufelförmig ausgebildet. Dadurch weist eine Projektion oder ein Schnitt des Stegs 6i auf eine Transversalebene 30e der gemeinsamen Symmetrieachse 30 einen gekrümmten Verlauf auf. In dem dritten Ausführungsbeispiel endet der Steg 6i im Bereich der Mantelfläche 20m des Blechpakets 21 in Radialrichtung 30r.

In dem Ausführungsbeispiel der FIG 7 ist eine optionale Variante der dritten Ausführungsform gezeigt, in welcher ein erster Abstand 71 zwischen einem Endbereich des Stegs 6i und einer ersten Aussparung 41 für einen ersten elektrischen Leiter 51 kleiner ist als ein zweiter Abstand 72 zwischen dem Steg 6i und einer zweiten Aussparung 42 für einen zweiten elektrischen Leiter 52, die zu der ersten Aussparung 41 benachbart ist.

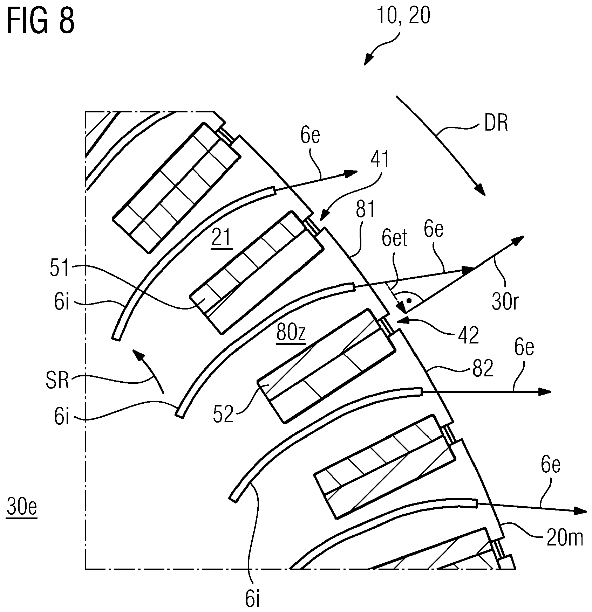

Die FIG 8 zeigt eine Detailansicht der Ansicht der FIG 2 für eine vierte Ausführungsform des Rotors 10 mit elektrischen Leitern 51, 52. Auch in dem Ausführungsbeispiel der FIG 8 sind die Stege 6i schaufelförmig ausgebildet. Dadurch weist eine Projektion oder ein Schnitt des Stegs 6i auf eine Transversalebene 30e der gemeinsamen Symmetrieachse 30 einen gekrümmten Verlauf auf. In dem vierten Ausführungsbeispiel endet der Steg 6i im Bereich der Mantelfläche 20m des Blechpakets 21 in einer Endrichtung 6e, die bezogen auf die gemeinsame Symmetrieachse 30 eine Tangentialkomponente 6et aufweist.

Mittels der unsymmetrischen Anordnung des oder der Stege 6i und/oder mittels einer schaufelförmigen Form des oder der Stege 6i kann dem Rotor 10 eine geänderte Radiallüfterfunktion verliehen werden. Durch diese Maßnahmen kann bei geringen Kühlleistungsanforderungen unter Umständen sogar auf eine Kühlmittelpumpe oder auf ein Kühlmittelgebläse verzichtet werden.

Alle in der Figurenbeschreibung beschriebenen Ausführungsformen haben gemeinsam, dass es für die elektromagnetische Vorrichtung eine bevorzugte Anströmrichtung SR gibt und/oder dass es für den Rotor 10r eine bevorzugte Drehrichtung DR gibt, in der (gegenüber einer entgegengesetzten Anströmrichtung und/oder einer entgegengesetzten Drehrichtung) unerwünschte Strömungswiderstände verringert sind, ein Durchsatz des Kühlmittels durch die elektromagnetische Vorrichtung erhöht ist und/oder eine Kühlmittelzufuhr für zu kühlende Teile der elektromagnetischen Vorrichtung verbessert ist.

Eine besonders vorteilhafte Ausführungsform sieht vor, dass der Steg 6i eine erste Randseite 6r1 und eine zweite Randseite 6r2 aufweist, wobei die erste Randseite 6r1 ein erstes Blechpaket 21 berührt und die zweite Randseite 6r2 ein zweites Blechpaket 22 berührt.

Es wird eine Blechpaketanordnung 20 für eine elektromagnetische Vorrichtung vorgeschlagen, die mindestens zwei ring- oder ringsegmentförmige Blechpakete 21, 22 umfasst, die auf einer gemeinsamen Symmetrieachse 30 nebeneinander flächenparallel aufgereiht angeordnet sind. Mindestens zwei der Blechpakete 21, 22 sind benachbart und zueinander beabstandet. Die Blechpakete 21, 22 weisen jeweils mindestens eine erste und eine zweite Aussparung 41, 42 auf. Die Aussparungen 41, 42 sind jeweils zur Aufnahme mindestens eines elektrischen Leiters 51, 52 vorgesehen. Die Blechpaketanordnung umfasst mindestens einen Steg 6i, dessen Breitenrichtung 6b überwiegend parallel zur gemeinsamen Symmetrieachse 30 verläuft und dessen Dickenrichtung 6d bezogen auf die gemeinsame Symmetrieachse 30 überwiegend in Tangentialrichtung 30t verläuft. Der Steg 6i ist bezogen auf die Tangentialrichtung 30t zwischen zwei benachbarten Aussparungen 41, 42 unsymmetrisch angeordnet.

## Patentansprüche

1. Rotor (10) mit einer Blechpaketanordnung (20), wobei die Blechpaketanordnung (20) umfasst:
- mindestens zwei ring- oder ringsegmentförmige Blechpakete (21,22), die auf einer gemeinsamen Symmetrieachse (30) nebeneinander flächenparallel aufgereiht angeordnet sind, wobei mindestens zwei der Blechpakete (21,22) benachbart und zueinander beabstandet sind, wobei jedes Blechpaket (21,22) an seinem Außenumfang eine Vielzahl von Zähnen (81,82) aufweist, wobei die Blechpakete (21,22) zwischen den Zähnen (81,82) jeweils mindestens eine erste und eine zweite Aussparung (41,42) aufweisen, wobei die Aussparungen (41,42) jeweils zur Aufnahme mindestens eines elektrischen Leiters (51,52) vorgesehen sind, wobei jedes der Blechpakete (21,22) mittels einer Nabe (20n) auf einer Welle (10w) des Rotors (10) befestigt ist, dessen Rotationsachse mit der gemeinsamen Symmetrieachse (30) zusammenfällt, und wobei jedes der Blechpakete (21,22) zwischen der Nabe (20n) eines jeden Blechpakets (21,22) und seinen Zähnen (81,82) Durchbrüche (10d) zur Führung eines Kühlmittels (10k) aufweist;
- mindestens ein Steg (6i), dessen Breitenrichtung (6b) überwiegend parallel zur gemeinsamen Symmetrieachse (30) verläuft und dessen Dickenrichtung (6d) bezogen auf die gemeinsame Symmetrieachse (30) überwiegend in Tangentialrichtung (30t) verläuft;
**dadurch gekennzeichnet, dass**
der Steg (6i) bezogen auf die Tangentialrichtung (30t) zwischen zwei benachbarten Aussparungen (41,42) unsymmetrisch angeordnet ist und sich radial höchstens bis zu den Durchbrüchen (10d) erstreckt.

2. Rotor (10) nach Anspruch 1, **dadurch gekennzeichnet, dass** ein erster Abstand (71) des Stegs (6i) zu der ersten Aussparung (41) kleiner ist als ein zweiter Abstand (72) des Stegs (6i) zu der zweiten Aussparung (72).

3. Rotor (10) nach Anspruch 1 oder 2, **dadurch gekennzeichnet, dass** eine Längsachse (6a) des Stegs (6i) die gemeinsame Symmetrieachse (30) schneidet.

4. Rotor (10) nach Anspruch 1 oder 2, **dadurch gekennzeichnet, dass** eine Längsachse (6a) des Stegs (6i) die gemeinsame Symmetrieachse (30) nicht schneidet.

5. Rotor (10) nach einem der Ansprüche 1 bis 4, **dadurch gekennzeichnet, dass** eine Projektion oder ein Schnitt des Stegs (6i) auf eine Transversalebene (30e) der gemeinsamen Symmetrieachse (30) einen gekrümmten Verlauf aufweist.

6. Rotor (10) nach Anspruch 5, **dadurch gekennzeichnet, dass** der Steg (6i) an einer Mantelfläche (20m) des Blechpakets (21,22) bezogen auf die gemeinsame Symmetrieachse (30) in Radialrichtung (30r) endet.

7. Rotor (10) nach Anspruch 5, **dadurch gekennzeichnet, dass** der Steg (6i) an einer Mantelfläche (20m) des Blechpakets (21,22) in einer Endrichtung (6e) endet, die bezogen auf die gemeinsame Symmetrieachse (30) eine Tangentialkomponente (6et) aufweist.

8. Rotor (10) nach einem der Ansprüche 1 bis 7, **dadurch gekennzeichnet, dass** der Steg (6i) als Schaufel ausgebildet ist, die bezogen auf die gemeinsame Symmetrieachse (30) im Verlauf über eine Radialrichtung (30r) und/oder im Verlauf über eine Richtung parallel zur gemeinsamen Symmetrieachse (30) in der Tangentialrichtung (30t) gekrümmt ist.

## Claims

1. Rotor (10) with a laminated core arrangement (20), wherein the laminated core arrangement (20) comprises:
- at least two laminated cores (21,22) in the shape of a ring or ring segment, which are arranged adjacently to one another in a line with parallel surfaces on a common axis of symmetry (30), wherein at least two of the laminated cores (21, 22) are adjacent and spaced apart from one another, wherein each laminated core (21,22) has a multiplicity of teeth (81,82) on its outer circumference, wherein the laminated cores (21, 22) in each case have at least one first and one second notch (41,42) between the teeth (81,82), wherein the notches (41,42) in each case are provided to receive at least one electrical conductor (51,52), wherein each of the laminated cores (21,22) is fastened by means of a hub (20n) to a shaft (10w) of the rotor (10), the axis of rotation of which coincides with the common axis of symmetry (30), and wherein between the hub (20n) of each laminated core (21, 22) and its teeth (81, 82) each of the laminated cores (21,22) has apertures (10d) for guiding a coolant (10k);
- at least one web (6i), the width direction (6b) of which runs predominantly in parallel with the common axis of symmetry (30) and the thickness direction (6d) of which runs predominantly in the tangential direction (30t) in relation to the common axis of symmetry (30);
**characterised in that**
the web (6i) is arranged asymmetrically between two adjacent notches (41,42) in relation to the tangential direction (30t) and extends radially at most up until the apertures (10d).

2. Rotor (10) according to claim 1, c h a r a c t e r i s e d
i n t h a t a first spacing (71) between the web (6i) and the first notch (41) is smaller than a second spacing (72) between the web (6i) and the second notch (72).

3. Rotor (10) according to claim 1 or 2,
**characterised in that** a longitudinal axis (6a) of the web (61) intersects the common axis of symmetry (30).

4. Rotor (10) according to claim 1 or 2,
**characterised in that** a longitudinal axis (6a) of the web (61) does not intersect the common axis of symmetry (30).

5. Rotor (10) according to one of claims 1 to 4,
**characterised in that** a projection or a section of the web (6i) has a curved profile on a transversal plane (30e) of the common axis of symmetry (30).

6. Rotor (10) according to claim 5, **characterised in that** the web (6i) ends on a lateral surface (20m) of the laminated core (21,22) in the radial direction (30r) in relation to the common axis of symmetry (30).

7. Rotor (10) according to claim 5, **characterised in that** the web (6i) ends on a lateral surface (20m) of the laminated core (21,22) in an end direction (6e), which has a tangential component (6et) in relation to the common axis of symmetry (30).

8. Rotor (10) according to one of claims 1 to 7,
**characterised in that** the web (6i) is embodied as a blade, which is curved in the tangential direction (30t) in relation to the common axis of symmetry (30) as it runs in a radial direction (30r) and/or as it runs in a direction parallel to the common axis of symmetry (30).

## Revendications

1. Rotor (10), comprenant un agencement (20) de paquet de tôles, l'agencement (20) de paquet de tôles comprenant :
- au moins deux paquets (21, 22) de tôles annulaires ou en forme de segment d'anneau, qui sont rangés parallèlement à une surface les uns à côté des autres sur un axe (30) de symétrie commun, au moins deux des paquets (21, 22) de tôle étant voisins et à distance l'un de l'autre, chaque paquet (21, 22) de tôles ayant sur son pourtour extérieur une pluralité de dents (81, 82), les paquets (21, 22) de tôles ayant, entre les dents (81, 82) respectivement au moins une première et une deuxième encoches (41, 42), les encoches (41, 42) étant prévues respectivement pour la réception d'au moins un conducteur (51, 52) électrique, chacun des paquets (21, 22) de tôles étant fixé au moyen d'un moyeu (20n) sur un arbre (10w) du rotor (10), dont l'axe de rotation coïncide avec l'axe (30) de symétrie commun et chacun des paquets (21, 22) de tôles ayant, entre le moyeu (20n) de son paquet (21, 22) de tôles et ses dents (81, 82), des traversées (10d) de passage d'un fluide (10k) de refroidissement;
- au moins une réglette (6i), dont la direction (6b) en largeur s'étend d'une manière prépondérante parallèlement à l'axe (30) de symétrie commun et dont la direction (6d) en épaisseur s'étend, rapportée à l'axe (30) de symétrie commun, d'une manière prépondérante dans la direction (30t) tangentielle;
**caractérisé en ce que**
la réglette (6i) est, rapportée à la direction (30t) tangentielle, disposée dissymétriquement entre deux encoches (41, 42) voisines et s'étend radialement, au plus, jusqu'aux traversées (10d).

2. Rotor (10) suivant la revendication 1, **caractérisé en ce qu'**une première distance (71) de la réglette (6i) à la première encoche (41) est plus petite qu'une deuxième distance (72) de la réglette (6i) à la deuxième encoche (72).

3. Rotor (10) suivant la revendication 1 ou 2, **caractérisé en ce qu'**un axe (6a) longitudinal de la réglette (6i) coupe l'axe (30) de symétrie commun.

4. Rotor (10) suivant la revendication 1 ou 2, **caractérisé en ce qu'**un axe (6a) longitudinal de la réglette (6i) ne coupe pas l'axe (30) de symétrie commun.

5. Rotor (10) suivant l'une des revendications 1 à 4, **caractérisé en ce qu'**un projection ou une coupe de la réglette (6i), sur un plan (30e) transversal de l'axe (30) de symétrie commun, a un tracé incurvé.

6. Rotor (10) suivant la revendication 5, **caractérisé en ce que** la réglette (6i) se termine dans la direction (30r) radiale rapportée à l'axe (30) de symétrie commun, sur une surface (20m) latérale du paquet de tôles.

7. Rotor (10) suivant la revendication 5, **caractérisé en ce que** la réglette (6i) se termine sur une surface (20m) latérale du paquet (21, 22) de tôles dans une direction (6e) d'extrémité, qui, rapportée à l'axe (30) de symétrie commun, a une composante (6et) tangentielle.

8. Rotor (10) suivant l'une des revendications 1 à 7, **caractérisé en ce que** la réglette (6i) est constituée sous la forme d'une pale, qui, rapportée à l'axe (30) de symétrie commun, dans le tracé sur une direction (30r) radiale et/ou dans le tracé sur une direction parallèle à l'axe (30) de symétrie commun, est incurvée dans la direction (30t) tangentielle.
